# EUROPEAN PATENT APPLICATION

(11) **EP 3 441 327 A1**
(43) Date of publication of application: **13.02.2019**
(21) Application number: 17382562.1
(22) Date of filing: 09.08.2017
(51) Int. Cl.: B65G 1/04, B66F 9/07

(54) **OVERHEAD TRAVELLING STACKER CRANE**

(71) Applicant: Air Vol, S.A., AD400 Arinsal (AD); Llimargas Barjuan, Eduard, 08530 La Corriga (Barcelona) (ES)
(72) Inventor: LLIMARGAS BARJUAN, Eduard, 08530 LA GARRIGA (BARCELONA) (ES)
(74) Representative: Pons

(57) **Abstract**

The present invention relates to an overhead travelling stacker crane in use on very narrow aisle storage system, commonly comprising a storage and retrieval system in a warehouse or industrial site. The stacker crane here described optimises a warehouse storage volume, minimising the wasted space in form of aisles between storage rows, by using ultra narrow aisle configurations between racking systems, and leaves free aisle circulation for pedestrian and other traffic, as well as requires no specific precision of floor levelness or smoothness.

## Description

### OBJET OF THE INVENTION

The present invention relates to an overhead travelling stacker crane in use on very narrow aisle storage systems, commonly comprising a storage and retrieval system in a warehouse or industrial site. The stacker crane here described optimises a warehouse storage volume, minimising the wasted space in form of aisles between storage rows, by using ultra narrow aisle configurations between storage systems, and leaves free aisle circulation for pedestrian and other traffic, as well as requires no specific precision of floor levelness or smoothness.

The object of the invention is therefore an overhead travelling stacker crane for storage and/or retrieval of pallets or similar in a storage racking system.

### BACKGROUND OF THE INVENTION

Different pallet/load handling systems are known and can be found in industrial environments and storage warehouses, operating as storage and retrieval systems within aisles between storage racking rows, which may be driven by an on-board operator:
- Forklifts and trucks.
- Stacker cranes:
   a) Floor rail dependent stacker cranes.
   b) Overhead travelling stacker cranes (bridge cranes).

Several types of forklifts and trucks are known for warehouse handling operations, vehicles able to handle pallets & loads based on floor transportation, mostly rolling wheels, and able to operate in wide, narrow and very narrow aisle storage racking systems.

Forklifts being able to operate in very narrow aisle racking systems require a floor levelness and floor smoothness of a very high precision, and are relatively costly in both initial and operating costs.

There are stacker cranes to handle pallets & loads which are configured to run along and onto a rail/s on the floor (additionally sometimes balanced by a beam/s on the topmost part), and are able to operate in narrow and very narrow aisle storage racking systems.

Those are generally automatic storage and retrieval systems, although manually operated systems exist too.

Those floor-based stacker cranes require at least one rail mounted on the floor, which is an obstacle for pedestrians and alternative floor-based traffic. Embedding the rail onto the floor to leave it flush with the floor surface represents a relatively high initial cost investment. Furthermore, those cranes are typically dedicated to a single storage aisle, and require special and costly extra devices to transfer between different storage aisles.

There are also overhead travelling stacker cranes which are configured as bridge cranes (top or under running bridge, multiple girder with top or under running trolley hoist) and are running along rails supported on top or above the storage racking system, and configured to operate in wide or narrow racking aisles. Those storage and retrieval devices do not make any contact onto the aisle floor, leaving the storage aisle free for pedestrians and other traffic. And consequently, they do not require a levelled floor to operate.

The invention described here below falls into the classification of overhead travelling stacker cranes; a typical overhead stacker crane (bridge crane) comprises the following subparts/assemblies:
- overhead rails extending along and on top or above racking system rows;
- a bridge assembly extending between and travelling onto and along the rails;
- a trolley assembly extending between and travelling onto and along the bridge;
- a mast assembly attached to and extending downwards from the trolley, the mast member provided with rotation around vertical axis with regard to the trolley member;
- a vertical carriage member travelling along and guided by the mast;
- a load lifting attachment mounted on the carriage member, generally this being forks to handle standard pallets in use in warehouses;

The already known overhead travelling stacker cranes are however restricted in very narrow aisles, they are not able to safely and efficiently operate in very narrow aisle storage racking systems, requiring aisle widths considerably wider than the load size to be handled due to the required operational clearances. Furthermore, those storage and retrieval apparatus are configured so that:
- its control and operation is not intuitive, generally the travel motions control is made through a series of push buttons or switches which always activate the same crane travel motions, independently of the operator orientation.
- they lack a safety control system to protect the crane/operator/storage system by means of preventing collision of the mast assembly and load lifting attachment against the storage system structure.

The overhead travelling stacker crane for storage and/or retrieval of pallets or similar in a storage racking system of the invention solves the aforementioned problems minimising the wasted space in form of aisles between storage rows.

### DESCRIPTION OF THE INVENTION

The present invention corresponds to an overhead travelling stacker crane in use on very narrow aisle storage systems, commonly comprising a storage and retrieval system in a warehouse or industrial site. The crane here described optimises a warehouse storage volume, since the wasted space in form of aisles between storage rows is minimized, by using ultra narrow aisle configurations between racking systems, and leaves free aisle circulation for pedestrian and other traffic, as well as requires no specific precision of floor levelness or smoothness, being preferably a manually controlled overhead travelling stacker crane.

The present invention relates to an overhead travelling stacker crane for storage and/or retrieval of pallets or similar in a storage racking system, the overhead travelling stacker crane comprising:
- overhead rail members;
- at least one bridge member extending between and travelling along the rail members;
- at least one mast member connected to and extending downwards from the at least one bridge member;
- at least one vertical carriage member configured to travel vertically along, being guided by the mast member;
- at least one load lifting attachment member configured to handle pallets or similar in use in a warehouse.

The overhead travelling stacker crane further comprises a carriage set further comprising:
- at least one side carriage member configured to travel horizontally, and
- at least one rotation carriage member configured to pivot around a vertical axis, wherein the at least one load lifting attachment member is mounted on the carriage set.

Thus, the overhead travelling stacker crane so configured makes possible that the at least one load lifting attachment member moves perpendicularly to the racking system, herein referred as cross-aisle, as well as parallel to it, referred as down-aisle. Down-aisle and cross-aisle directions are therefore perpendicular directions oriented with regard to the storage racking system in the warehouse.

Optionally, the at least one mast member comprises at least one trolley member extending between and configured to travel along the at least one bridge member.

Optionally, the overhead travelling stacker crane also comprises at least one platform or cabin member mounted on the at least one mast member, providing a protected and safe area for an operator to ride on and control the stacker crane.

Optionally, the at least one mast member is configured to rotate, preferably 360º, around a vertical axis with regard to the at least one bridge member or the at least one trolley member.

Optionally, the overhead travelling stacker crane also comprises at least one hoisting device member attached to the at least one bridge member, the at least one trolley member or the at least one mast member and configured to propel the at least one vertical carriage member.

Optionally, the overhead travelling stacker crane also comprises a first sensor device configured to detect the presence of the operator on the at least one platform member allowing operation of the crane only when operator presence is detected, thus enhancing operational safety. Preferably, the first sensor device is mounted on the at least one mast member mast or the platform or cabin member.

Optionally, the overhead travelling stacker crane also comprises a second sensor device configured to monitor the horizontal position of the at least one mast member, wherein the second sensor device is preferably mounted on the at least one bridge member and/or the trolley member.

Optionally, the overhead travelling stacker crane also comprises a third sensor device configured to monitor the orientation angle of the at least one mast member, wherein the third sensor device is preferably mounted on the at least one bridge member and/or the trolley member and/or the at least one mast member.

Optionally, the overhead travelling stacker crane also comprises a fourth sensor device configured to monitor the horizontal position of the at least one load lifting attachment member, wherein the fourth sensor device is preferably mounted on the at least one mast member or the at least one side carriage member.

Optionally, the overhead travelling stacker crane also comprises a fifth sensor device configured to monitor the orientation angle of the at least one load lifting attachment member, wherein the fifth sensor device is preferably mounted on the at least one side carriage member and/or the at least one rotation carriage member and/or the at least one load lifting attachment member.

Optionally, the overhead travelling stacker crane also comprises power transfer means to drive all motions, preferably this being electrical motors.

Optionally, the overhead travelling stacker crane also comprises at least one control member configured to operate all motions of the stacker crane in the storage racking system.

Optionally, the overhead travelling stacker crane also comprises at least one toggle switch configured to toggle between different input signal for the at least one control member.

Optionally, the overhead travelling stacker crane also comprises at least one control system configured to receive feedback from the described sensor devices and operator inputs and provides output signals to the corresponding power transfer means.

In this way, the overhead travelling stacker crane so configured may be manually controlled for stacking and retrieving loads from one or multiple very narrow aisle storage racking systems, which incorporates at least one load lifting attachment member for side picking and depositing pallets/loads from both sides of the aisle/stacker crane in the storage racking system; and whereby the stacker crane can only be safely driven from an on-board platform or cabin, and travel motions directions are controlled through the at least one control member as physically seen from the operator's position, following the at least one mast member orientation; the at least one control system continuously monitors the position and orientation of the at least one mast member and the at least one load lifting attachment member to prevent collision against the storage racking system; therefore maximising safety and enhancing easiness of operation.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Fig. 1 is a perspective view of an example of the overhead travelling stacker crane of the present invention for usage in very narrow aisle storage racking systems, showing its main constituent components and motions.
Fig. 2 is an explosion view of Figure 1.
Fig. 3 is a front view of an example of a single-aisle overhead travelling stacker crane in use with a very narrow aisle storage racking system, showing its main constituent components.
Fig. 4 is a detailed view of an example of a portion of the at least one mast member, containing the at least one platform, two control members and the at least one toggle switch.
Fig. 5 is a detailed view of an example of a control member and its available motions.
Fig. 6 shows an example of the input signals controlled by two control members using a first position of the at least one a toggle switch.
Fig. 7 shows an example of the input signals controlled by two control members using an alternative/second position of the at least one a toggle switch.
Figs. 8A to 8E shows top views of an example for the specified sequence of steps/positions within the racking aisle which are achieved through the synchronization of the at least one side carriage member and the at least one rotation carriage member, allowing the full change of the at least one load lifting attachment member orientation within a very narrow aisle storage system.
Fig. 9 is a detailed perspective view of an example of the at least one vertical carriage member in engagement with the at least one side carriage member and the at least one load lifting attachment member, showing its main constituent components.
Fig. 10 is a side view of an example of the at least one side carriage member and the at least one load lifting attachment member, showing its main constituent components.
Fig. 11 is a detailed top view of an example of the at least one mast member, the at least one vertical carriage member, the at least one side carriage member and the at least one load lifting attachment member.
Fig. 12 is a detailed front view of an example of a single-aisle overhead travelling stacker crane, in use with a load Q on the at least one load lifting attachment member, and showing reaction forces R1 and R2 on the linear guide carriages.

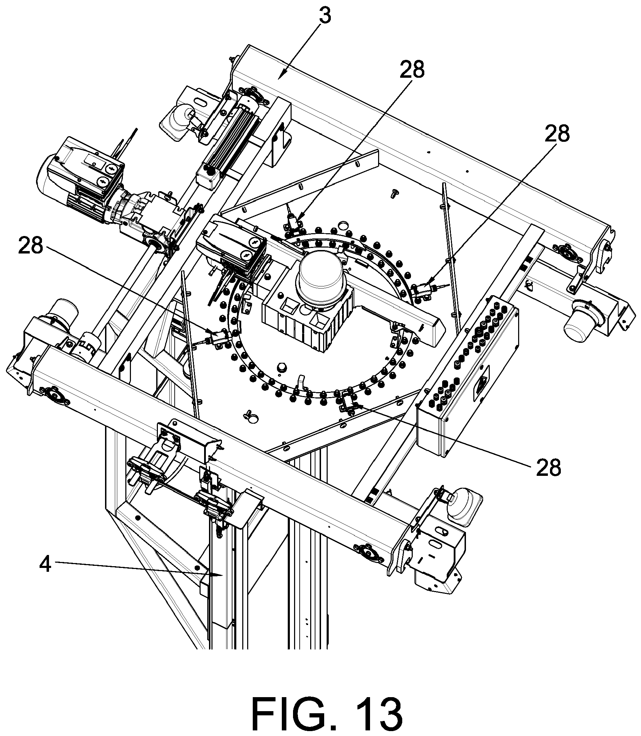

Fig. 13 is a detailed top perspective view of an example of a portion of the at least one mast member and the trolley member, showing the at least one third sensor device configured to monitor the orientation angle of the at least one mast member.

### PREFERRED EMBODIMENT OF THE INVENTION

In this preferred embodiment, the overhead travelling stacker crane for storage and/or retrieval of pallets or similar in a storage racking system comprises:
- overhead rail members (1) extending along and generally on top of or above racking system rows (10) or onto independent support structures;
- at least one bridge member (2) extending between and travelling onto/into and along the rail members;
- at least one trolley member (3) extending between and travelling onto and along the bridge member (2);
- at least one mast member (4) connected to and extending downwards from the at least one bridge member or the at least one trolley member (3), wherein, preferably, the at least one mast member (4) is configured to rotate, preferably 360º, around a vertical axis with regard to the at least one bridge member (2) or the at least one trolley member (3);
- at least one platform or cabin member (8) mounted on the at least one mast member (4); providing a protected and safe area for an operator to ride on and control the stacker crane;
- at least one hoisting device member (9) attached to the at least one bridge member (2), the at least one trolley member (3) or the at least one mast member (4);
- at least one vertical carriage member (5) configured to travel vertically along, being guided by the mast member and propelled by the hoisting device member (9);
- at least one load lifting attachment member (7) configured to handle pallets (30) or similar in use in a warehouse, preferably being forks;
- at least a carriage set further comprising:
   o at least one side carriage member (6) configured to travel horizontally, cross-aisle, and being guided by the at least one vertical carriage member (5), and
   o at least one rotation carriage member (37) configured to pivot around a vertical axis, and being mounted onto the at least one side carriage member (6);
wherein the at least one load lifting attachment member (7) is mounted on the at least one rotation carriage member (37).

The overhead travelling stacker crane also comprises a first sensor device (11) configured to detect the presence of the operator on the at least one platform or cabin member (8) allowing operation of the crane only when operator presence is detected, thus enhancing operational safety. Preferably, the first sensor device (11) is mounted on the at least one platform or cabin member (8).

The overhead travelling stacker crane also comprises a second sensor device (38) configured to monitor the horizontal position of the at least one mast member (4), wherein the second sensor device (38) is preferably mounted on the at least one bridge member (2) and the trolley member (3).

The overhead travelling stacker crane also comprises a third sensor device (28) configured to monitor the orientation angle of the at least one mast member (4), wherein the third sensor device (28) is preferably mounted on the at least one bridge member (2) or the at least one trolley member (3) or the at least one mast member (4).

The overhead travelling stacker crane also comprises a fourth sensor device (39) configured to monitor the horizontal position of the at least one load lifting attachment member (7), wherein the fourth sensor device (39) is preferably mounted on the at least one mast member (4) or the at least one side carriage member (6).

The overhead travelling stacker crane also comprises a fifth sensor device (40) configured to monitor the orientation angle of the at least one load lifting attachment member (7), wherein the fifth sensor device (40) is preferably mounted on the at least one side carriage member (6) or the at least one rotation carriage member (37) or the at least one load lifting attachment member (7).

The overhead travelling stacker crane also comprises power transfer means (21, 22) to drive all motions, preferably this being motor drive units, preferably electrical motors. The stacker crane incorporates one motor drive unit for each stacker crane motion; therefore up to six different motor drives must be controlled to properly operate all crane functions. Each motor drive unit can operate in opposite directions, to allow full functionality of the crane without restraints. Therefore up to twelve different control signals must be input to the control system to independently control all motions of the stacker crane in all directions.

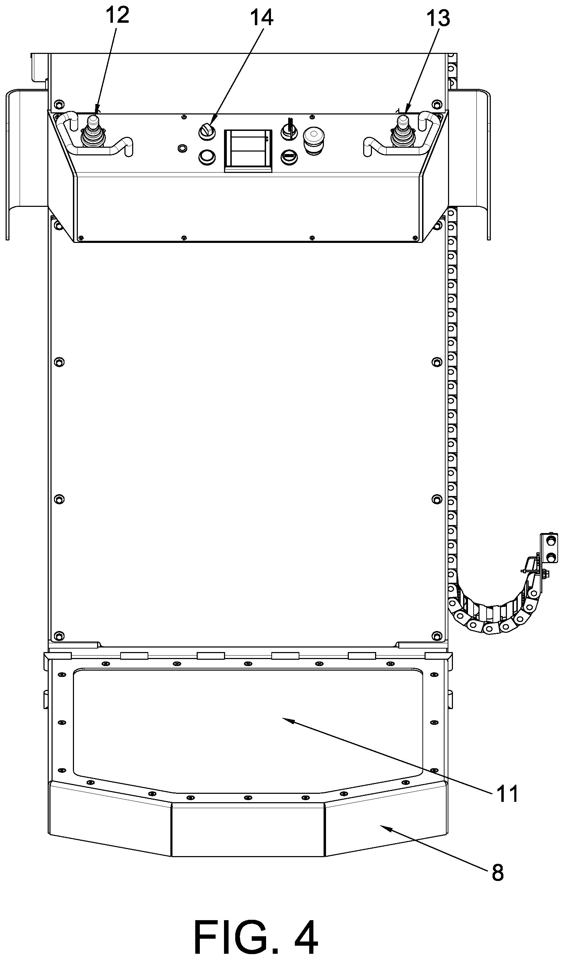

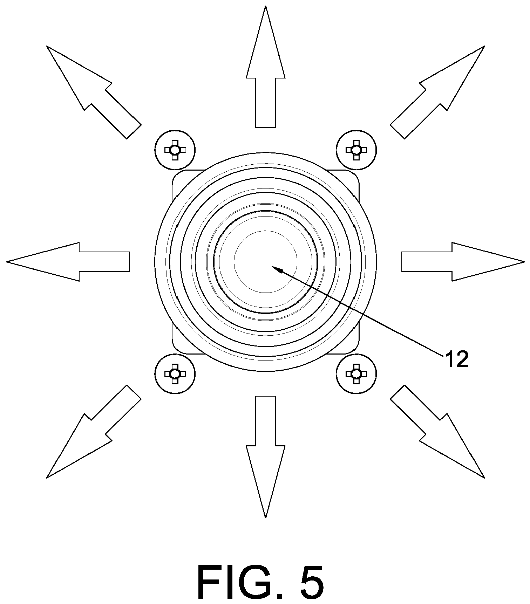

The overhead travelling stacker crane also comprises two control members (12, 13) configured to operate all motions of the stacker crane in the storage racking system, the two control members (12, 13) preferably disposed on the at least one mast member (4) (Figure 4) and preferably being bidirectional joysticks, to operate all motions of the stacker crane in the storage system, preferably allowing movement mainly in two perpendicular directions both in positive and negative sides of each direction (thus providing four different input signals for each joystick lever). Motion of the joystick lever in diagonal position may also be provided, in that case triggering simultaneously the control signals corresponding to the adjacent perpendicular directions (Figure 5).

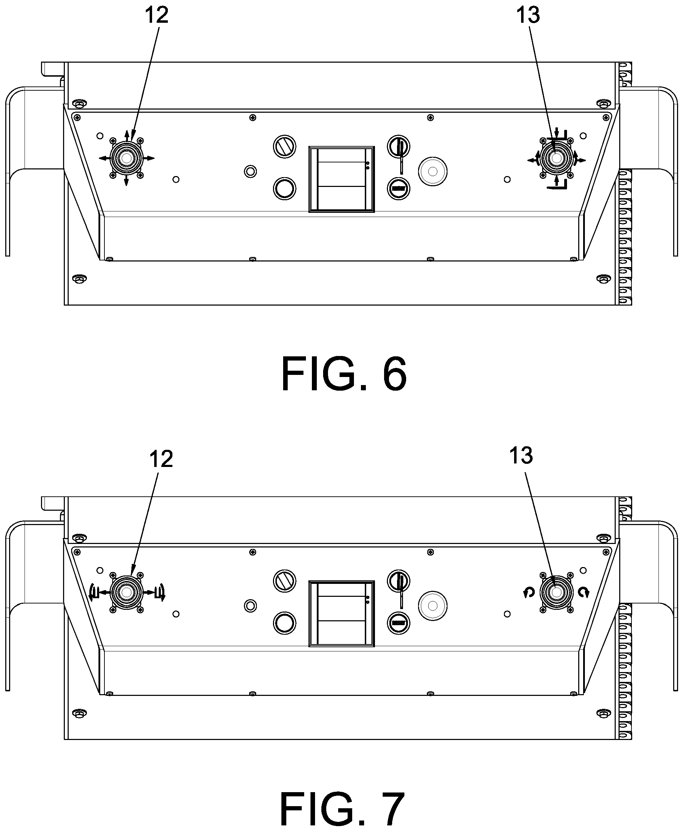

The overhead travelling stacker crane also comprises at least one toggle switch (14) configured to toggle between different input signal for the two control members (12, 13), the at least one toggle switch (14) preferably disposed on the at least one mast member (4) (Figure 4). The toggling switch (14) allows the two bidirectional joysticks (12, 13) to provide up to sixteen different input signals, enough to operate all fourteen motions required for the full operation of the stacker crane here described (Figure 6 and 7).

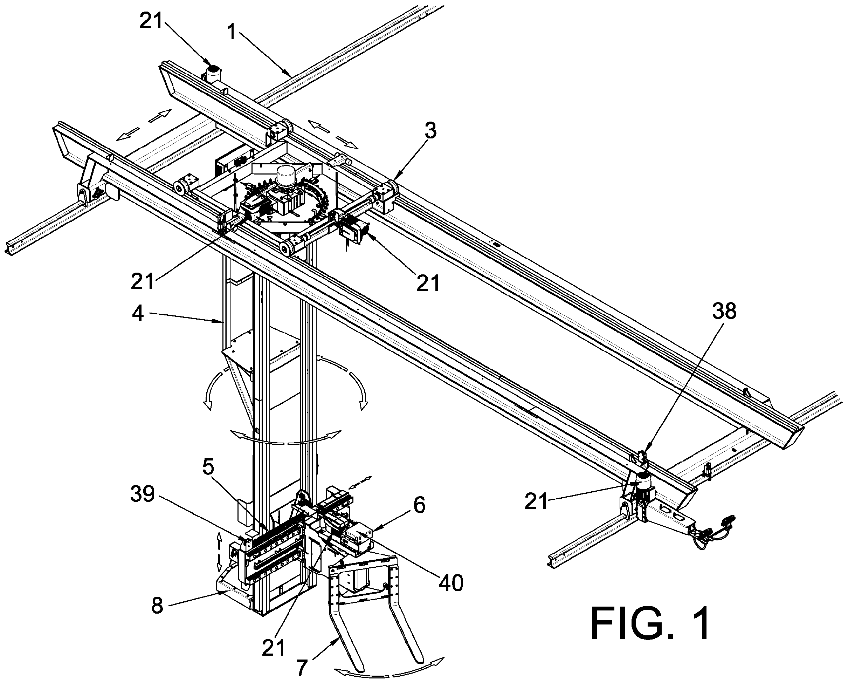

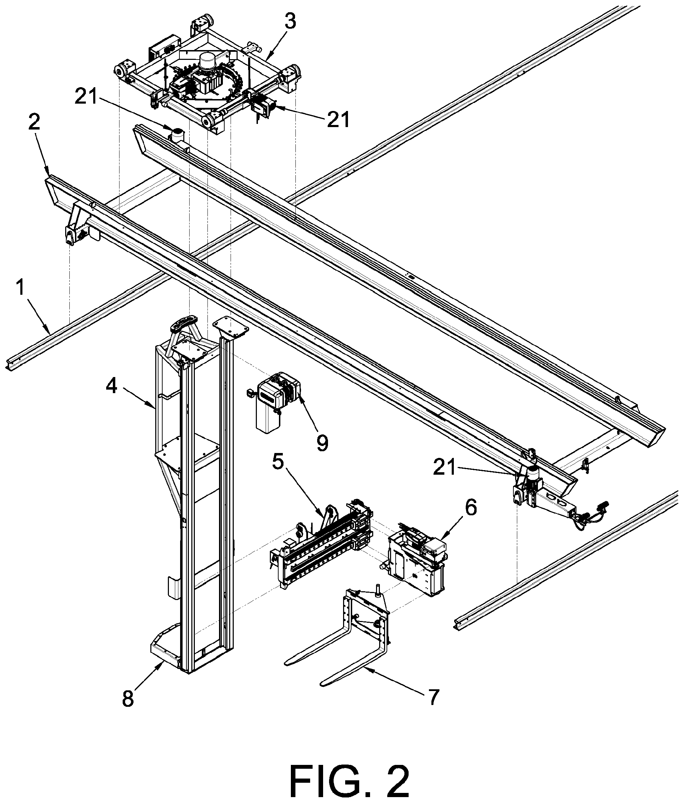

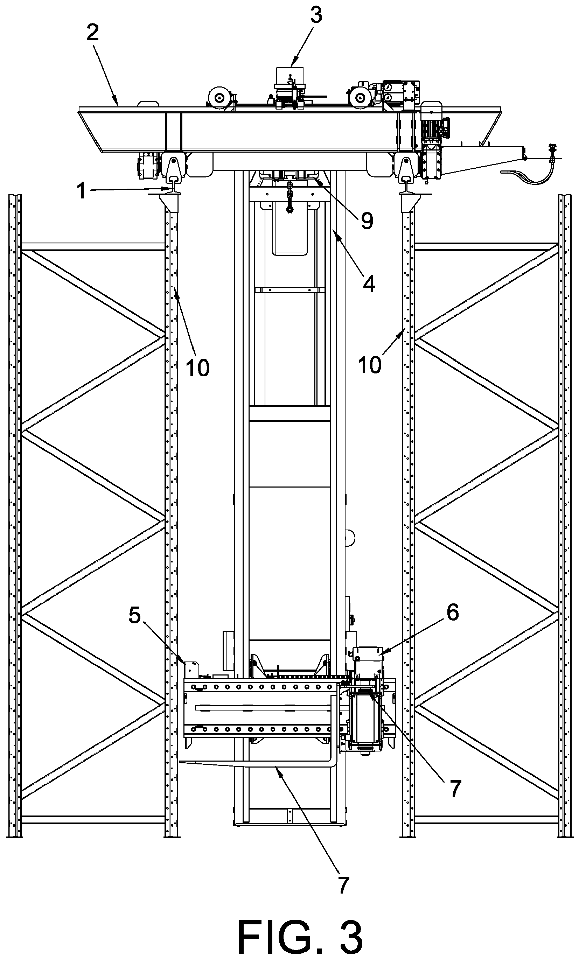

The overhead travelling stacker crane also comprises at least one control system configured to receive feedback from the described sensor devices (11, 38, 28, 39, 40) and operator inputs and provides output signals to the corresponding power transfer means (21, 22) for manually controlling the overhead travelling stacker crane shown in Figures 1, 2 and 3 used for stacking and retrieving loads from one or multiple very narrow aisle storage racking systems, which incorporates the at least one load lifting attachment member (7), being a side loading lifting attachment member capable of picking and depositing pallets/loads from both sides of the aisle/stacker crane in the storage racking system; and whereby the stacker crane can be safely driven from the at least one platform or cabin member (8) mounted on the stacker crane, and wherein travel motions directions are controlled through control members (12, 13) as physically seen from the operator's position, following the at least one mast member (4) orientation; the at least one control system continuously monitoring the position and orientation of at least one mast member (4) and the at least one load lifting attachment member (7) to prevent collision against the racking storage system; therefore maximising safety and enhancing easiness of operation.

In operation, the at least one mast member (4) may be typically oriented in such a way to allow that the at least one load lifting attachment (7) moves perpendicularly to the storage racking system, herein referred as cross-aisle, as well as parallel to it, referred as down-aisle. Down-aisle and cross-aisle directions are therefore perpendicular directions oriented with regard to the storage racking system in the warehouse.

In the typical arrangement of the stacker crane a single input signal from any joystick is linked to a single motor drive unit from the stacker crane, so motor drive units are controlled separately.

The stacker crane may allow simultaneous/synchronized operation of the at least one bridge member (2) and the at least one trolley member (3), allowing crane travel motion in horizontal diagonal paths within the storage racking system in the warehouse. Synchronized motion of both members (2, 3) may be achieved when placing a first joystick (12) in diagonal position, as described above, between any of the main two perpendicular positions from the first joystick (12). Synchronized operation the at least one bridge member (2) and the at least one trolley member (3) allows using shorter travel paths and consequently shorter travel times and increased handling throughput.

The at least one side carriage member (6) and the at least one rotation carriage member (37) which control position and orientation angle of the at least one load lifting attachment member (7) may be controlled and operated independently or simultaneously, the latest function being necessary to change direction of the at least one load lifting attachment member (7) whilst the stacker crane operates inside a very narrow aisle racking system. The simultaneous or synchronized control and operation of both motor drive units requires a couple of extra input signals (one for each motion direction).

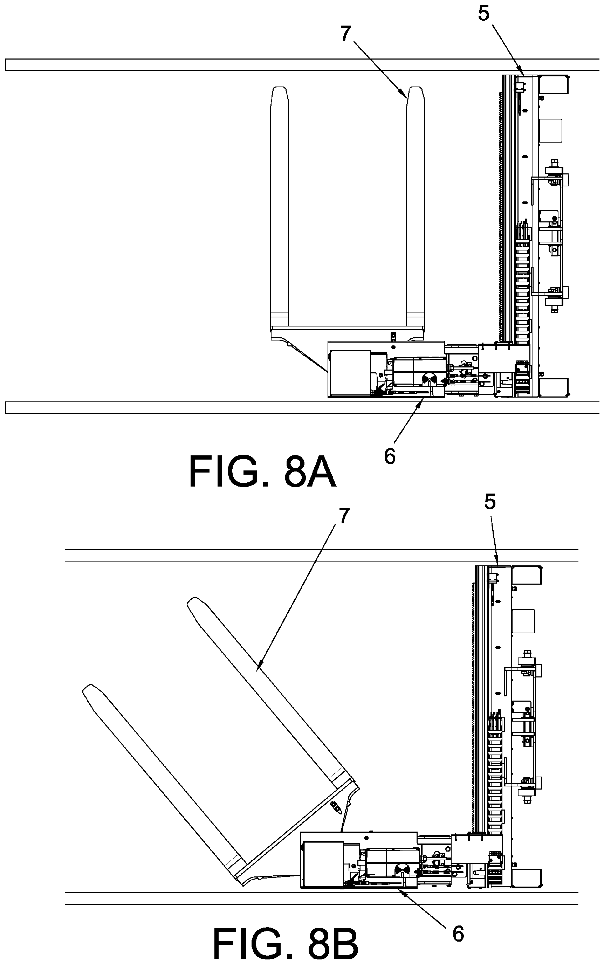

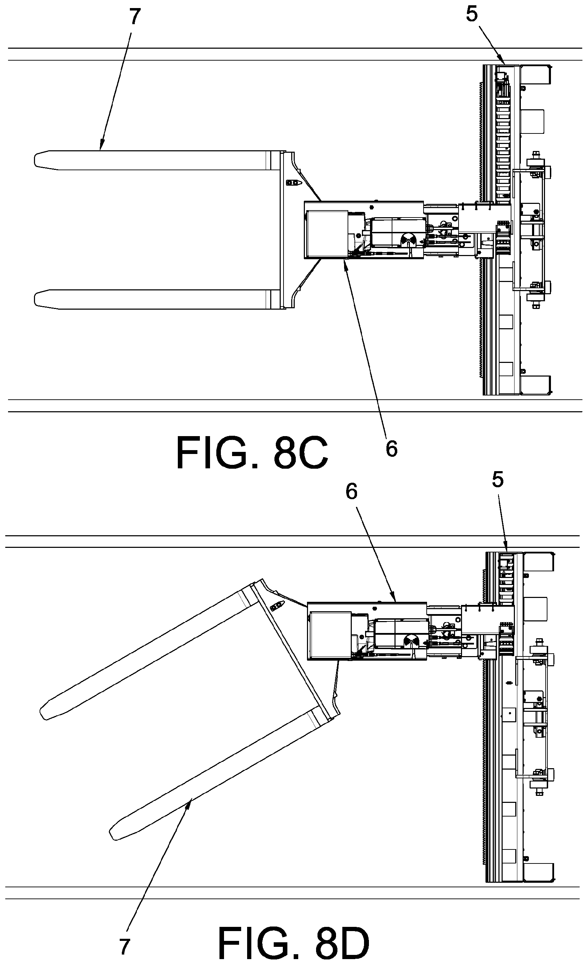

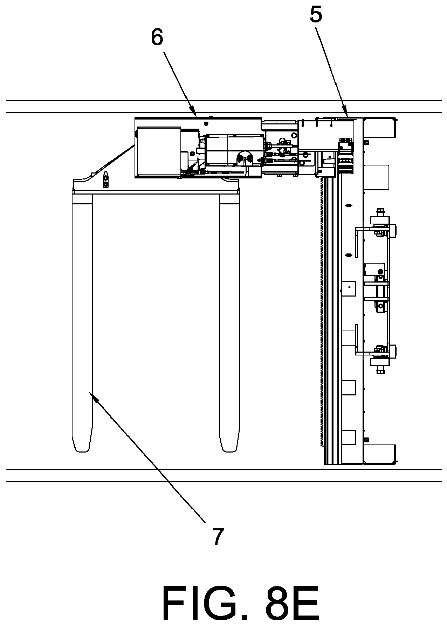

The synchronized operation of the at least one side carriage member (6) and the at least one rotation carriage member (37) is defined so that a specified sequence of the at least one load lifting attachment member (7) positions within the racking aisle is followed (Figure 8), minimizing the aisle width required for changing orientation of the at least one load lifting attachment member (7). Thus, optimization of the aisle width is achieved, consequently minimizing the wasted space in the storage racking system.

The stacker crane may incorporate the operator platform or cabin member (8) in a fix position onto the at least one mast member (4), or it may be travelling vertically along and guided by the at least one mast member (4), the operator platform or cabin member (8) being fixed onto the at least one vertical carriage member (5) so that the crane operator is lifted together with the load. The stacker crane can hence be used to lift the operator up and pick goods directly from the storage racking system at height.

The overhead travelling stacker crane may be configured for use in a single-aisle racking row (10) described above or may be used in multiple-aisle racking systems, changing the operation between different rack aisles. The stacker crane can hence be driven and moved between storage aisles. The at least one trolley member (3) may travel cross-aisle between desired aisles.

The stacker crane, when the at least one mast member (4) is oriented in down-aisle direction, may have the capability to pick and deposit pallets (30)/goods from each storage aisle side, so in perpendicularly usage to the storage racking systems in both rows (10) on each side of the at least one mast member (4). The following is a description of the mechanism that achieves the side motion and rotation of the at least one load lifting attachment member (7) within the storage aisle.

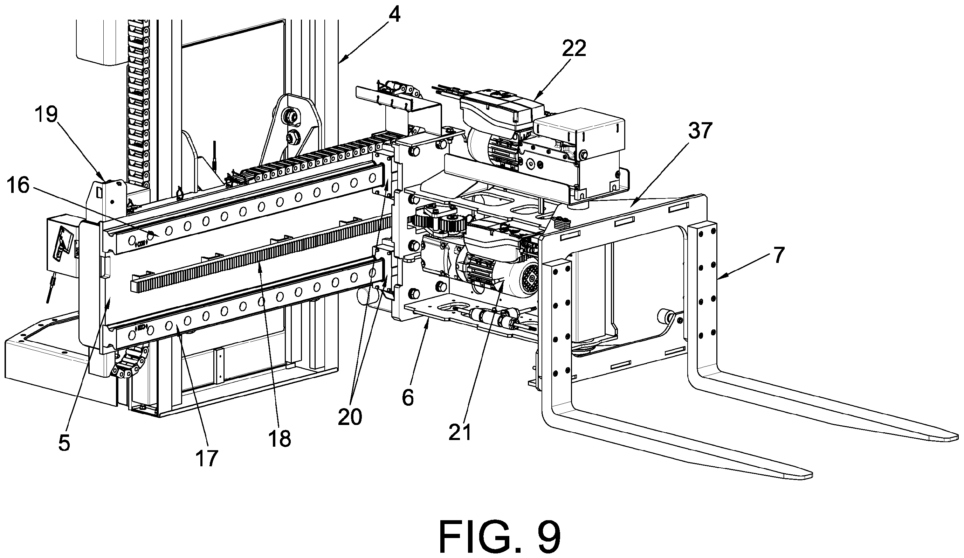

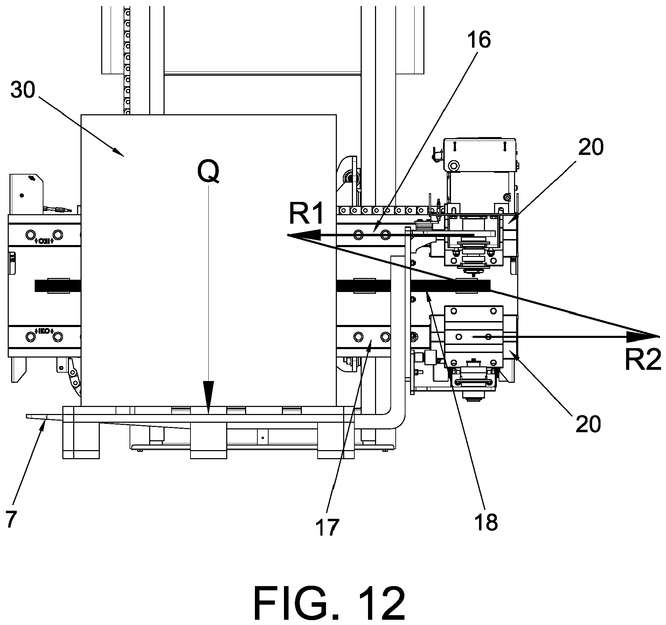

The overhead travelling stacker crane comprises a vertical carriage member (5) (Fig. 9), preferably with its width close to the overall width of the storage aisle, in which an upper linear guide (16) and a lower linear guide (17) are mounted in cross horizontal position and parallel each other, both linear guides (16, 17) vertically spaced as much as possible within the vertical carriage member (5), correspondingly to the maximum weight to be lifted by the at least one load lifting attachment member (7), to be able to effectively withstand the overturning moments around down-aisle and cross-aisle directions existent due to the load horizontal eccentricity when carried by the at least one load lifting attachment member (7) (Fig. 9 and Fig. 12).

Both upper linear guide (16) and lower linear guide (17), by engaging with mating carriages (20) correspondingly, provide the horizontal side motion of the side carriage member (6) across the aisle. Only one mating carriage (20) is in use on each linear guide (16, 17), in order to minimize the side carriage member (6) width and therefore aisle clearance required between storage rows (10) (Fig. 12).

The vertical carriage member (5) also incorporates a gear rack (18) fixed in cross horizontal position and vertically centred between both upper and lower linear guides (16, 17), so keeping an equal vertical distance from both guides (16, 17). The gear rack (18), in engagement with a coupling gear mounted on a first electrical motor (21), provides mechanical transmission means to transfer the powered motion from the first electrical motor (21) to the side carriage member (6). The first electrical motor (21) is affixed onto the side carriage member (6) thus, when power is transferred to the gear rack (18), being the latter sideways immobilised by the mast member (4), the first electrical motor (21) and the side carriage member (6) move together across the aisle following the path defined by the horizontal linear guides (16, 17) (Fig. 9).

The gear rack (18), when assembled equally spaced from both upper (16) and lower (17) linear guides, coincides with the centreline of the overturning moment generated by the load eccentricity in down-aisle direction (Fig. 12). Consequently, the resultant overturning moment due to the load eccentricity in that direction becomes null just on the gear rack line (Fig. 12), and therefore the horizontal force transferred to the gear rack (18) and coupling motor, due to the load eccentricity is therefore negligible. This becomes a major advantage for the mechanism life, avoiding excessive/extra loads and mechanical vibrations on the coupling motor and gear transmission.

At the same time, the horizontal side force transferred to the gear rack (18) by the motor gear coupling, when engaged and during power transmission, is fully centred between upper (16) and lower (17) linear guides, thus fully balanced and avoiding the generation of additional overturning moments on the side carriage member (6) (that would be the case, for example, if the gear rack (18) was not equally spaced between upper (16) and lower (17) linear guides). This feature again avoids extra loads and mechanical instabilities on the gear transmission and allows the use of minimal power to mechanically move the side carriage member (6) sideways.

The side carriage member (6) is constructed as a body which comprises the first electrical motor (21) inside its frame (Fig. 9, Fig. 10 and Fig. 11), thus maximising the available clearance above, below and on the sides of the side carriage member (6). That feature allows maximising the vertical travel of the vertical carriage member (5) along the mast member (4), maximising the vertical reach of the stacker crane to pick and place goods from the storage racking system, as well as minimizing the side carriage member (6) width and therefore the overall aisle width required between storage rows (10).

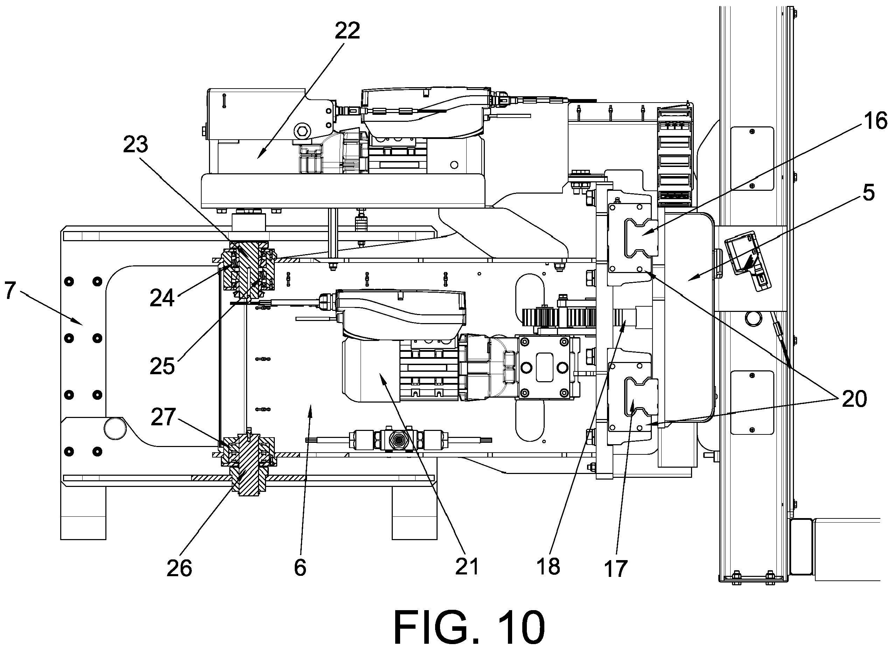

In the side carriage member (6) a split vertical shaft comprising an upper shaft (23) and a lower shaft (26) is mounted in its farthest position away from the vertical carriage member (5), correspondingly to the pallet (30)/load size in use in the storage racking system. The split vertical shaft (23, 26), wherein the upper shaft (23) is concentric to the lower shaft (26), provides articulation means for the load lifting attachment member (7), to allow 180º vertical rotation of the load lifting attachment member (7) with regard to the side carriage member (6), thus full rotation from side to side of the storage aisle (Fig. 10).

The upper shaft (23) is configured in such a manner as to support and transfer the whole vertical load of the load lifting attachment member (7) to the side carriage member (6), by means of a couple of tapered bearings (24, 25) or alike means, vertically spaced each other and assembled opposite of each other, thus supporting vertical loads in both directions. Upper shaft (23) is also able to support radial loads through the tapered bearings, originated by the load eccentricity.

Furthermore, the upper shaft (23) engages with a second electrical motor (22), and thus transfers the whole motor torque required to rotate the load lifting attachment member (7).

The lower shaft (26) is configured to transfer only radial loads from the load lifting attachment member (7) to the side carriage member (6), and therefore only standard ball bearings (27) are used as a supporting means for the lower shaft (26), without the need to support any vertical load.

Radial loads are due to the load horizontal eccentricity of the pallet (30)/goods on the load lifting attachment member (7).

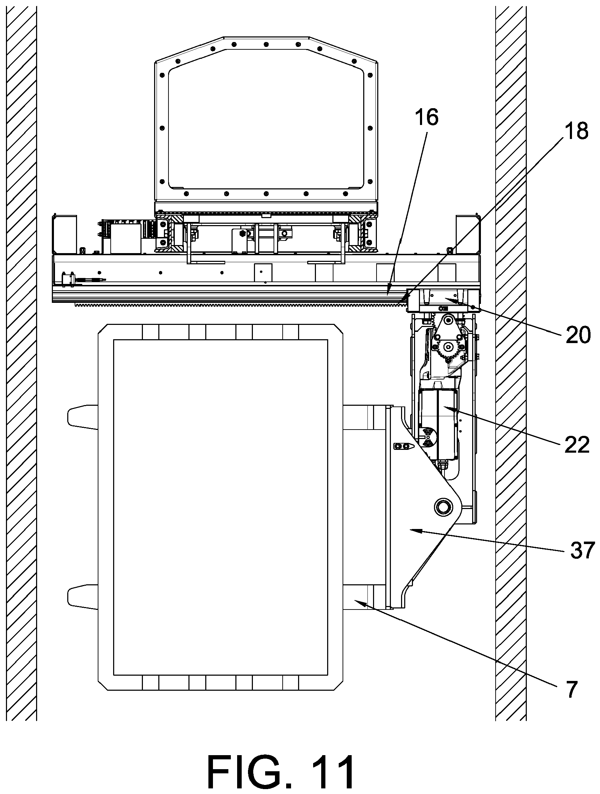

Vertical clearance between upper shaft (23) and lower shaft (26) provides free space to allow assembly and disassembly of the first electrical motor (21) inside the side carriage member (6) (Fig. 11 and 12).

The second electrical motor (22) is mounted and fixed to the side carriage member (6), in horizontal position and contained within a footprint of the side carriage member (6), again minimising the side carriage member (6) overall width and therefore the aisle width required between storage rows (10), as well as to maximise the vertical travel of the vertical carriage member (5) along the mast member (4), and to maximise the vertical reach of the stacker crane.

The stacker crane may comprise a sixth sensor device (19) configured to monitor the horizontal position of side carriage member (6) along linear guides (16, 17), thus across the aisle (Fig. 9).

The fifth sensor device (40) signal and the sixth sensor device (19) signal may be input into the stacker crane control system for calculation of the sequence of positions required to turn the load lifting attachment member (7) (Figs. 8A to 8E) into the aisle using synchronized motion of the side carriage member (6) and the load lifting attachment (7).

## Claims

1. Overhead travelling stacker crane for storage and/or retrieval of pallets or similar in a storage system, the overhead travelling stacker crane comprising:
• overhead rail members (1);
• at least one bridge member (2) extending between and travelling along the rail members (1);
• at least one mast member (4) connected to and extending downwards from the at least one bridge member (2);
• at least one vertical carriage member (5) configured to travel vertically along, being guided by the mast member (4);
• at least one load lifting attachment member (7) configured to handle pallets (40) or similar in use in a warehouse:
**characterized in that** it further comprises a carriage set further comprising:
• at least one side carriage member (6) configured to travel horizontally, and
• at least one rotation carriage member (37) configured to pivot around a vertical axis,
wherein the at least one load lifting attachment member (7) is mounted on the carriage set.

2. Overhead travelling stacker crane according to claim 1 **characterized in that** the at least one mast member (4) comprises at least one trolley member (3) extending between and configured to travel along the at least one bridge member (2).

3. Overhead travelling stacker crane according to any one of the previous claims **characterized in that** it also comprises at least one platform or cabin member (8) mounted on the at least one mast member (4).

4. Overhead travelling stacker crane according to claim 2 **characterized in that** the at least one mast member (4) is configured to rotate, preferably 360º, around a vertical axis with regard to the at least one bridge member (2) or the at least one trolley member (3).

5. Overhead travelling stacker crane according to claim 2 **characterized in that** it also comprises at least one hoisting device member (9) attached to the at least one bridge member (2), the at least one trolley member (3) or the at least one mast member (4) and configured to propel the at least one vertical carriage member (5).

6. Overhead travelling stacker crane according to any one of the previous claims **characterized in that** it also comprises at least one control member (12, 13) configured to operate all motions of the stacker crane in the storage system.

7. Overhead travelling stacker crane according to claim 6 **characterized in that** it also comprises at least one toggle switch (14) configured to toggle between different input signal for the at least one control member (12, 13).

8. Overhead travelling stacker crane according to claim 2 **characterized in that** it is configured to allow simultaneous/synchronized operation of the at least one bridge member (2) and the at least one trolley member (3), allowing crane travel motion in horizontal diagonal paths within the storage system in the warehouse.

9. Overhead travelling stacker crane according to any one of the previous claims **characterized in that** the at least one vertical carriage member (5) comprises an upper linear guide (16) and a lower linear guide (17) mounted in cross horizontal position and parallel each other, both linear guides (16, 17) being vertically spaced as much as possible within the vertical carriage member (5).

10. Overhead travelling stacker crane according to claim 9 **characterized in that** both upper linear guide (16) and lower linear guide (17), by engaging with mating carriages (20) correspondingly, provide a horizontal side motion of the side carriage member (6) across the aisle, wherein preferably only one mating carriage (20) is linked to each linear guide (16, 17).

11. Overhead travelling stacker crane according to claim 10 **characterized in that** the vertical carriage member (5) also incorporates a gear rack (18) fixed in cross horizontal position and vertically centred between both upper and lower linear guides (16, 17), wherein the gear rack (18), in engagement with a coupling gear mounted on a first electrical motor (21), provides mechanical transmission means to transfer the powered motion from a first electrical motor (21) to the side carriage member (6).

12. Overhead travelling stacker crane according to claim 11 **characterized in that** a split vertical shaft comprising an upper shaft (23) and a lower shaft (26) is mounted on the side carriage member (6) in its farthest position away from the vertical carriage member (5), correspondingly to the pallet (30)/load size in use in the storage system.

13. Overhead travelling stacker crane according to claim 12 **characterized in that** the upper shaft (23) is concentric to the lower shaft (26) wherein the split vertical shaft (23, 26) provides articulation means for the load lifting attachment member (7), to allow 180º vertical rotation of the load lifting attachment member (7) with regard to the side carriage member (6).

14. Overhead travelling stacker crane according to claim 12 **characterized in that** the upper shaft (23) is configured in such a manner as to support and transfer the whole vertical load of the load lifting attachment member (7) to the side carriage member (6), by means of a couple of tapered bearings (24, 25) or alike means, vertically spaced each other and assembled opposite of each other, thus supporting vertical loads in both directions.

15. Overhead travelling stacker crane according to claim 9 **characterized in that** it comprises a first sensor device (11) configured to detect the presence of the operator on the at least one platform or cabin member (8) and/or a second sensor device (38) configured to monitor the horizontal position of the at least one mast member (4) and/or a third sensor device (28) configured to monitor the orientation angle of the at least one mast member (4), and/or a fourth sensor device (39) configured to monitor the horizontal position of the at least one load lifting attachment member (7), and/or a fifth sensor device (40) configured to monitor the orientation angle of the at least one load lifting attachment member (7) and/or a sixth sensor device (19) configured to monitor the horizontal position of side carriage member (6) along linear guides (16, 17), wherein a fifth sensor device (40) signal and a sixth sensor device (19) signal are input into a stacker crane control system for calculation of the sequence of positions required to turn the load lifting attachment member (7) into the aisle using synchronized motion of the side carriage member (6) and the load lifting attachment (7).
